# EUROPEAN PATENT APPLICATION

(11) **EP 1 598 323 A1**
(43) Date of publication of application: **23.11.2005**
(21) Application number: 05252841.1
(22) Date of filing: 10.05.2005
(51) Int. Cl.: C03B 37/027, C03C 25/60, C03C 25/62

(54) **Method for manufacturing optical fiber**

(30) Priority: 12.05.2004 US 570279 P; 16.02.2005 US 58821
(71) Applicant: THE BOC GROUP, INC., New Providence, NJ 07974-2082 (US)
(72) Inventor: Shirley, Arthur Irving, Hillsborough NJ 08844-2241 (US); Lu, Yaping, Fanwood NJ 07023 (US)
(74) Representative: Wickham, Michael

(57) **Abstract**

A method for manufacturing an optical fiber by contacting the optical fiber during the draw operation with deuterium, a deuterium-containing gas mixture or a deuterium ion plasma. The treatment or coating is performed in a treatment tube that is either separate from or combined with the fiber cooling tube.

## Description

### BACKGROUND OF THE INVENTION

The present invention relates to the manufacture of optical fiber, particularly low water peak fiber (LWPF), including the in situ treatment of optical fiber while the fiber is being drawn from a preform in a draw furnace.

Glass optical fibers are customarily made from preforms that are fabricated using the chemical vapor deposition (CVD) of a silica precursor. The CVD process often employs an oxy-hydrogen flame as a heat source to promote the reaction of the precursor with oxygen. This is done either as a direct oxidation (where the flame is separated from the CVD reaction zone) or as a hydrolysis reaction (where the precursor and oxygen react inside the oxy-hydrogen flame). In either case water vapor may be present in the deposited silica, a result of the presence of moisture in the raw materials or the action of the oxy-hydrogen flame. This small amount of moisture is known to localize in the deposited silica at certain defect sites in the glassy matrix to a degree sufficient to cause small but measurable increases in fiber attenuation. This increase in attenuation will cause a loss of some of the transmission spectrum of the cable. Even if various drying steps in the production of the fiber remove the moisture, hydrogen in the environment surrounding the fiber will diffuse over time into the core of the fiber to create additional light attenuating centers.

The transmission characteristics of optical fiber are determined by a number of factors such as scattering, fiber bending and adsorption. Hydroxyl (OH) absorption, or "water absorption" reduces useful bandwidth in the wavelength region in which many optical systems operate. OH absorption which is due to the vibrational overtones of hydroxyl ions in the fiber, causes three loss peaks at 950 nm, 1240 nm and 1385 nm. It is desirable to reduce these loss peaks especially the 1385 nm peak as this will effectively provide an uninterrupted region of relatively low transmission loss from 1200 to 1600 nm. One type of absorption loss is the aging loss that includes hydrogen-aging loss that occurs during the lifetime of the fiber. Such losses are thought to occur because of the chemical reactions between the various defects in the optical fiber and hydrogen in the optical fiber environment diffusing into the fiber.

One means to combat this increase in attenuation due to the presence of hydrogen in the fiber is the use of deuterium, an isotope of hydrogen containing an electron, a proton and a neutron. Like hydrogen, the deuterium will localize in the deposited silica at defect sites in the glassy matrix. Although this will again cause an increase in attenuation, the resonant peaks and their tails lie outside of the bands of the spectrum currently used for transmission. The presence of deuterium will prevent further uptake of hydrogen by the fiber, effectively making it "water-free" over its useful life.

Optical fiber can be treated or "soaked" with deuterium at two stages in fiber production: after the preform is deposited, and after the fiber is drawn. A typical treatment consists of exposing the preform or fiber to a quiescent mix of deuterium in an inert gas, usually 1-10% deuterium in nitrogen. The concentration of deuterium is important to the diffusional processes that allow the glass to take up deuterium, but very little of the deuterium in the mixture is incorporated in the glass. The balance of the gas used for treatment is vented and disposed of, representing a great cost in deuterium and an additional expense in fiber production.

As such, there is a need for methods for treating optical fibers that will passivate or coat the optical fiber while inhibiting the problems encountered during the fiber optic production process.

### SUMMARY OF THE INVENTION

The present invention provides for a method for passivating an optical fiber while the fiber is being drawn comprising contacting the fiber with deuterium. Alternatively, a deuterium-containing gas mixture can be employed wherein the gas mixed with deuterium is selected from the group consisting of helium, argon and nitrogen.

The present invention further provides for a method of passivating an optical fiber during a draw operation comprising contacting the fiber with a deuterium ion plasma.

As used herein, "deuterium-containing" means that the concentration of the deuterium in the gas mixture is from about 1 to about 100 percent by volume of deuterium.

An alternative embodiment of the present invention provides a method for the production of optical fiber comprising the steps:
a) drawing said optical fiber from a preform;
b) contacting the optical fiber with deuterium gas; and
c) recovering the unreacted deuterium gas.

Another alternative embodiment of the present invention provides for a method for inhibiting the chemical reactions between an optical fiber and hydrogen during the production of an optical fiber comprising contacting the optical fiber with deuterium.

### DETAILED DESCRIPTION OF THE INVENTION

The treatment of the optical fiber can be performed in a treatment tube that is present under the draw furnace. The treatment tube can be a separate device or can be combined with the fiber cooling tube or tubes employed in the manufacturing process.

The present invention of treating optical fiber before the fiber is cooled and coated with coating material is more effective than the conventional post-draw treatment. Combining fiber treatment and fiber cooling into one step has a number of advantages. Due to the high heat conductivity of deuterium, mixing deuterium with cooling gas will not reduce the cooling efficiency of the process.

The use of a deuterium mixture instead of pure deuterium gas will keep the treatment gas outside of the deuterium flammability limit and will also prevent the reduction reaction between the fiber glass material and deuterium in the hot region near to the draw furnace.

The gas that is employed in the gas mixture is preferably an inert gas and is more preferably selected from the group consisting of nitrogen, argon, helium and carbon dioxide. Typically deuterium is present in the gas mixture in an amount ranging from about 1% to about 10 % by weight.

Additional advantages achieved by this method include eliminating the need for treating optical fiber after the optical fiber is produced. This will reduce the amount of treatment equipment employed and will shorten production time.

In the methods of the present invention, the deuterium may be combined with the deuterium ion plasma to passivate the optical fiber during its production.

The spent treatment/cooling gas can be withdrawn from the device and collected to stop the deuterium from mixing with ambient air. This collected gas can either be purified and recycled back to the cooling tube or can be disposed by burning the hydrogen in a burn or mixing with an inert gas such as nitrogen.

The drawing process is started by lowering a preform into a furnace at the top of the draw tower. The preform is heated to a temperature at which the preform softens until a drop of molten glass stretches from the tip of the preform and falls under the force of gravity. The falling strand of glass is allowed to run sequentially through one or more deuterium-treatment device and or cooling devices and a coating applicator. Before the cooling gas is introduced, the treatment/cooling device could be purged by an inert gas such as nitrogen, argon, helium or carbon dioxide.

The deuterium-treatment gas/cooling gas is introduced from one or more inlet ports. Fiber is passivated by reacting deuterium diffusing into the fiber with the germanium or silicon defect centers and by the isotope exchange reaction of hydroxyl to deuteroxyl. The deuterium plasma can be employed in the deuterium treatment process to enhance the passivation of the fiber. Heat from the optical fiber is transferred to the cooling tube wall by the cooling gas. The spent cooling gas can be withdrawn from the outlet ports located at the top and the bottom of the deuterium treatment/cooling device by a blower or a pump.

The treatment or coating of the glass fiber is preferably performed in a treatment tube that is separate from or a continuation of a fiber cooling tube.

The spent gases from the treatment/cooling device are sent to a purification unit where the impurities in the spent gas stream are removed. These impurities are typically air, moisture and carbon dioxide but can include other gases present in the atmosphere. The purification unit can be any purification system that separates the coolant from the impurities and sealing gases that may be used in the top and bottom of the treatment/cooling device. The purification system may be selected from the group consisting of a pressure swing adsorption (PSA) system, a membrane system, a distillation system, a cryogenic separation system, or combination of these systems.

The purified gas can be mixed with fresh treatment/cooling gas and recycled. Alternatively, the spent gas mixture withdrawn from the cooling tube can be sent to a burner where the cooling gas is burned with air. The spent gas also could be mixed with inert gas and disposed of safely. The inert gas can be nitrogen or carbon dioxide and could be obtained from the waste gas stream from another process.

To further inhibit the flammable gas deuterium from coming out from the top and bottom openings where the fiber enters and leaves the treatment/cooling tube, sealing gas can be used. The sealing gas can be a gas selected from the group consisting of nitrogen, carbon dioxide, argon or mixtures thereof which can be introduced into the top above the outlet port and bottom below the outlet port of the treatment/cooling tube. The sealing gas can be fed into the treatment/cooling device or sealing gas chambers attached to the treatment/cooling device.

While this invention has been described with respect to particular embodiments thereof, it is apparent that numerous other forms and modifications of the invention will be obvious to those skilled in the art. The appending claims in this invention generally should be construed to cover all such obvious forms and modifications which are within the true spirit and scope of the present invention.

## Claims

1. A method of passivating an optical fiber during optical fiber production comprising contacting said optical fiber with deuterium.

2. A method as claimed in claim 1, comprising contacting said fiber with a deuterium-containing gas mixture.

3. A method as claimed in claim 2, wherein said gas mixture contains a gas selected from the group consisting of nitrogen, argon, helium and carbon dioxide.

4. A method as claimed in claim 2 or claim 3, wherein said deuterium is present in said gas mixture in an amount ranging from about 1 to about 10% by weight.

5. A method as claimed in any one of the preceding claims, wherein said deuterium contacts said optical fiber before a coating is applied to said optical fiber.

6. A method as claimed in any one of the preceding claims, further comprising contacting said optical fiber with a deuterium ion plasma.

7. A method as claimed in any one of the preceding claims, wherein the deuterium that does not react with said optical fiber is recovered.

8. A method for the production of optical fiber in a draw process comprising the steps:
a) drawing said optical fiber from a preform;
b) contacting said optical fiber with deuterium gas as claimed in any of claims 1 to 7; and
c) recovering the unreacted deuterium gas.

9. A method for inhibiting the chemical reactions between an optical fiber and hydrogen during the production of an optical fiber comprising contacting said optical fiber with deuterium as claimed in any of claims 1 to 7.
